# EUROPEAN PATENT SPECIFICATION

(11) **EP 3 335 443 B1**
(45) Date of publication and mention of the grant of the patent: **17.07.2019**
(21) Application number: 16760549.2
(22) Date of filing: 10.08.2016
(51) Int. Cl.: H04W 4/90

(54) **METHODS AND SYSTEMS FOR SENDING ALERT MESSAGES IN MOBILE NETWORKS**
VERFAHREN UND SYSTEME ZUM SENDEN VON ALARMNACHRICHTEN IN MOBILEN NETZWERKEN
PROCÉDÉS ET SYSTÈMES POUR ENVOYER DES MESSAGES D'ALERTE DANS DES RÉSEAUX MOBILES

(30) Priority: 13.08.2015 IN 2500DE2015
(43) Date of publication of application: 20.06.2018
(73) Proprietor: UNIFIED MESSAGING SYSTEMS ASA, 0663 Oslo (NO)
(72) Inventor: POLU, Srinivasa Rao, Bangalore 560078 (IN)
(74) Representative: Grünecker Patent- und Rechtsanwälte PartG mbB
(86) International application number: PCT/IB2016/054808
(87) International publication number: WO 2017/025902

(56) References cited:
- WO-A1-2010/137993
- WO-A1-2013/095287
- WO-A1-2014/131439

## Description

### TECHNICAL FIELD

The present invention generally relates to public alert systems. More specifically, the present invention relates to controlling flow of alert messages during an alert event in a mobile network.

### BACKGROUND

Alert messages are generally sent to a large number of subscribers over a mobile network for alerting or for providing relevant information in situations, for example, emergency events, business needs, promotional events, launch of government schemes and the like. Typically, public alert systems are designed to operate with the mobile network to alert subscribers of emergencies and other alert events. For example, during an emergency situation such as an earthquake, a tornado or a severe thunderstorm in a location, an emergency authority may send an alert message via a public alert system to warn subscribers in the location of the emergency situation. In another example, an advertisement agency may send, through the mobile network, a promotional message regarding a brand or store to the targeted subscribers.

Such alert messages sent over the mobile network may include sending alert messages to millions of subscribers. Moreover, in urgent situations, the public alert systems are required to deliver mass/bulk alert messages to such large subscribers within a short time frame. In many cases, emergency authorities or mobile operators may not be prepared to deliver bulk alert messages through the mobile network in the given short time frame. During such emergency or alert events, the mobile network may have to deal with issues related to congestion and may encounter a higher number of delivery failures of the alert messages due to bulk alert messages accumulated in the mobile network. Hence, a better technique is required to overcome such disadvantages and to manage traffic flow of the alert messages efficiently.

From WO2013095287, WO2010137993 and WO2014131439 systems and methods are known for sending an alert message to a plurality of User Equipments (UEs) making use of UE location information while optimizing the throughput of the alert messages by taking into account traffic capacity and/or load of cells.

### SUMMARY

Various methods, systems and computer readable mediums for sending alert messages are disclosed. In an embodiment, a method for sending alert messages in a mobile network is disclosed. The method includes accessing location information of a plurality of user mobile devices in the mobile network from a database. The database is configured by integrating with one or more location sources in the mobile network and the database is different from a home location register and a home subscriber server of the mobile network. The method further includes accessing a message handling capacity information of each of a plurality of network elements in the mobile network. The method furthermore includes sending an alert message to the plurality of user mobile devices through the plurality of network elements based on the location information. Moreover, the alert message is sent through a network element of the plurality of network elements at a sending rate based on a message handling capacity information of the network element.

In an embodiment, a public alert system for sending alert messages in a mobile network is disclosed. The public alert system includes a database and a message handling system. The database is configured to store location information of a plurality of user mobile devices in the mobile network. Moreover, the database is configured by integrating with one or more location sources in the mobile network, and the database is different from a home location register and a home subscriber server of the mobile network. The message handling system is communicably coupled with the database for accessing the location information. The message handling system is configured to access message handling capacity information of each of a plurality of network elements in the mobile network. The message handling system is further configured to send an alert message to the plurality of user mobile devices through the plurality of network elements based on the location information. Moreover, the alert message is sent through a network element of the plurality of network elements at a sending rate based on a message handling capacity information of the network element.

### BRIEF DESCRIPTION OF THE FIGURES

For a more complete understanding of example embodiments of the present technology, reference is now made to the following descriptions taken in connection with the accompanying drawings in which:
FIG. 1 is a schematic diagram showing an example environment in which various embodiments of the present technology may be practiced;
FIG. 2 is a block diagram of a public alert system for sending alert messages in accordance with an embodiment;
FIG. 3 is a block diagram of the public alert system shown in a mobile network in accordance with an embodiment;
FIG. 4 illustrates a flow diagram of an example method for sending alert messages in accordance with an example embodiment;
FIG. 5 illustrates a flow diagram of an example method for static flow control of alert messages directed to an MSC of the mobile network in accordance with an example embodiment;
FIG. 6 illustrates a flow diagram of an example method for static flow control of alert messages directed to an SGSN of the mobile network in accordance with an example embodiment;
FIG. 7 illustrates a flow diagram of an example method for static flow control of alert messages directed to a BSC of the mobile network in accordance with an example embodiment;
FIG. 8 illustrates a flow diagram of an example method for static flow control of alert messages directed to an RNC of the mobile network in accordance with an example embodiment;
FIG. 9 illustrates a flow diagram of an example method for static flow control of alert messages directed to an MME of the mobile network in accordance with an example embodiment;
FIG. 10 illustrates a flow diagram of an example method for static flow control of alert messages directed to a HNB gateway of the mobile network in accordance with an example embodiment;
FIG. 11 illustrates a flow diagram of an example method for static flow control of alert messages directed to a BTS of the mobile network in accordance with an example embodiment;
FIG. 12 illustrates a flow diagram of an example method for static flow control of alert messages directed to a NodeB of the mobile network in accordance with an example embodiment;
FIG. 13 illustrates a flow diagram of an example method for static flow control of alert messages directed to an eNodeB of the mobile network in accordance with an example embodiment; and
FIG. 14 illustrates a flow diagram of an example method for static flow control of paging requests directed to an LAC in the mobile network in accordance with an example embodiment.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, apparatuses and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, others. Similarly, various requirements various features are described which may be exhibited by some embodiments and not by are described which may be requirements for some embodiments but not other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

The term 'alert event' used throughout the description includes any event in which bulk messages need to be sent a large subscriber base in any geographical area (also referred to as 'alert area'). The geographical area may range starting from a small cell area to as large as entire area covered by a mobile network. Examples of the alert event may include, but are not limited to emergency events, business promotions, meeting requests, government announcements, advertisements, and the like. Further, the terms users and subscribers are used interchangeably.

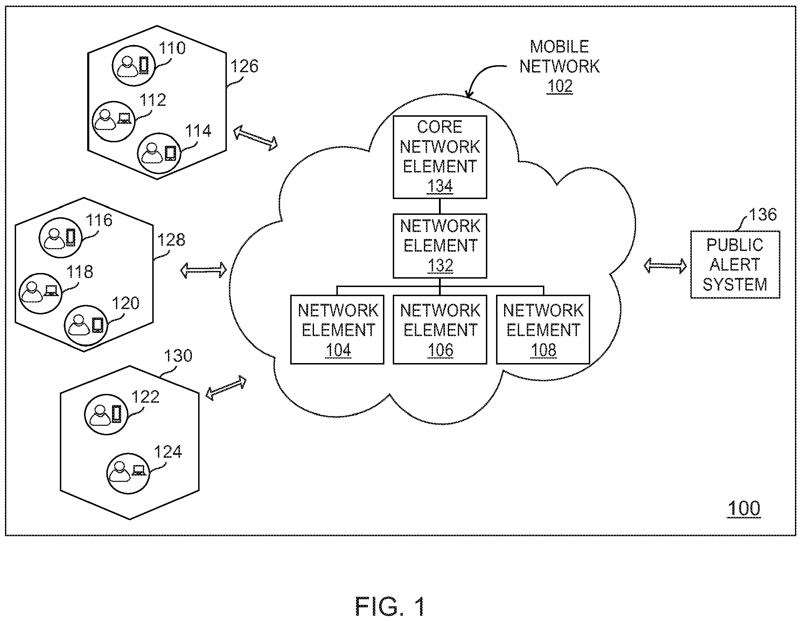

FIG. 1 illustrates an exemplary environment 100 in which various embodiments of the present disclosure may be practiced. An example representation of the environment 100 is shown depicting a mobile network 102 used by a plurality of users (also interchangeably referred to as 'subscribers') through their user communication equipments (*e.g*., user mobile devices). In this example representation, the plurality of users, for example, a user 110, a user 112, a user 114, a user 116, a user 118, a user 120, a user 122 and a user 124 (hereinafter collectively referred to as the users 110-124) are shown. A public alert/warning system, for example, a public alert system 136 may be associated with the mobile network 102. The public alert system 136 is configured to send bulk alert messages to users in one or more alert areas (*e.g*., the users 110-124 in location areas 126-130) during an alert event, for example, an emergency situation or any other scenario that requires sending of bulk message to large number of subscribers. For instance, examples of the emergency event may include, but are not limited to, flash floods, tsunami, earthquakes, hurricane, tornados, severe thunderstorms and the like. In some other examples, the public alert system 136 may be used in a business environment, where a business manager may wish to send bulk alert messages (*e.g*., for an urgent meeting) to his/her employers located in various locations, or the public alert system 136 may be used by a government agency to send bulk alert messages about launch of government schemes, etc.

The users 110-124 may communicate through the mobile network 102 in one or more forms of communication channels, for example, a voice channel, a video channel, a web channel, a messaging channel (such as a short message service (SMS) channel), an interactive voice response (IVR) channel, a native application channel and the like. At any particular time instance, each of the users 110-124 may be associated with a location area as defined in the mobile network 102, for example, the users 110, 112 and 114 are associated with the location area 126; the users 116, 118 and 120 are associated with the location area 128; and the users 122 and 124 are associated with the location area 130, respectively. Each user of the plurality of users may communicate in the mobile network 102 and receive alert messages from the public alert system 136 on respective user mobile device(s). Examples of a user mobile device may include, but are not limited to, a cell phone, a Smartphone, a tablet device, a laptop integrated with mobile communication capability and the like.

Examples of the mobile network 102 may include cellular networks operating in accordance with protocols including, but not limited to, a second-generation (2G) wireless communication protocols such as IS-136 (time division multiple access (TDMA)), GSM (global system for mobile communication), and IS-95 (code division multiple access (CDMA)); a third-generation (3G) wireless communication protocol, such as Universal Mobile Telecommunications System (UMTS), CDMA 1000, wideband CDMA (WCDMA) and time division-synchronous CDMA (TD-SCDMA); a 3.9G wireless communication protocol such as evolved universal terrestrial radio access network (E-UTRAN), a fourth-generation (4G) wireless communication protocol such as LTE (Long-Term Evolution) and a fifth-generation (5G) wireless communication protocol, or the like. In some scenarios, the mobile network 102 may also operate in conjunction with other forms of communication networks, for example, a landline network connected to a telephone exchange such as a public switched telephone network (PSTN), a wireless network, a private network (*i.e.* inside companies, call centers etc.,) and the like.

The mobile network 102 is constituted of a variety of network elements (*e.g*., base stations, controllers, switching centers, location registers, databases, gateways, etc.) that are interconnected in a tiered fashion for offering communication between user mobile devices of the users 110-124, the public alert system 136 and also with other connected networks. The network elements shown in the example representation of the mobile network 102 are only for the example purposes, and as such, these are provided for the purposes of solely representing some of the example network elements utilized in the mobile network 102.

In the example representation of the mobile network 102, example network elements such as a network element 104, a network element 106, and a network element 108 (hereinafter referred to as the 'network elements 104-108') may correspond to base stations and related components in various mobile standards, for example, 2G, 3G, 4G, and the like. For instance, any of the network elements (104-108) may include but are not limited to, a transceiver station such as a base transceiver station (BTS), a Node B, an Evolved-Universal Terrestrial Radio Access Network (E-UTRAN) Node B (eNodeB), a Home NodeB (HNB) or a femtocell, an HNB gateway a Home eNodeB (HeNB) and the like. The network elements 104-108 may include equipments for transmitting and receiving signals such as radio signals from user mobile devices (such as the user mobile devices associated with the users 110-124). The network elements 104-108 may also facilitate communication with one or more node controllers that are utilized for controlling and communicating with the network elements 104-108 and the user mobile devices. As shown in the example mobile network 102, a network element 132 may be a node controller for controlling and communicating with the network elements (104-108), for example, node controller and related components in various mobile standards, for example, 2G, 3G, 4G, and the like. For instance, examples of the network element 132 may include, but are not limited to, a base station controller (BSC), a radio network controller (RNC), mobility management entity (MME), a femtocell gateway (or HNB gateway) and the like.

Typically, the network element (132) is a node controller configured to handle allocation of radio channels and to control handovers within the mobile network 102. As such, the network element 132 of the mobile network 102 is configured to manage a set of connections of the network elements 104-108 and reduce the number of connections towards a core network element 134. The network element 132 is depicted to control only three network elements (*e.g*., 104-106) for example purposes, and it is understood that the network element 132 may communicate with such numerous network elements. Further, the network element 132 may be communicably coupled to the core network element 134 for switching and routing messages between the user mobile devices of the users 110-124, the public alert system 136 and other connected networks, for example PSTN or any other service providers. More specifically, when a user (such as the user 110) initiates a call or a message, the core network element 134 is configured to locate a right node controller (in this case the network element 132 shown in FIG. 1) from a plurality of node controllers handled by the core network element 134 by sending paging requests to all or a pre-determined number of node controllers associated with the core network element 134. Examples of the core network element 134 may include, but are not limited to a mobile switching centre (MSC), a serving GPRS support node (SGSN), a short message service centre (SMSC) and the like.

In an embodiment, the core network element 134 is associated with one or more switching functions, such as but not limited to call set-up, release, routing and the like. Additionally, the core network element 134, such as an MSC also performs routing of SMS messages, conference calls, fax, and service billing as well as interfacing with other networks, such as the PSTN.

It should be noted that the mobile network 102 may include a variety of other network elements, switches, gateways, routers, repeaters, antennas, etc., for the communication purposes, and herein for the purposes of the present description, only some of the relevant network elements are described. In an implementation, the core network element 134 may be connected to at least one visitor location register (VLR) for storing subscriber record of all user mobile devices that are currently located within the coverage of the network elements 104-108 associated with the core network element 134. Some other non-exhaustive examples of sourcing of subscriber records (*e.g*., location information) include integrating with one or more location sources in the mobile network 102. For instance, examples of integrating with the one or more location sources include, but are not limited to, integrating with probes installed on interfaces such as A-Interface, IuCS interface, IuPS interface, S1 interface, Abis interface, IuB interface, and the like; integrating with mobile positioning systems in the mobile network 102; and integrating with MSC call data records (CDRs) with location events. The subscriber record may include information such as details of the subscriptions and/or services associated with the user mobile devices (*e.g*., cell phones) for example mobile station international subscriber directory number (MSISDN) or telephone number, international mobile subscriber identity (IMSI), location information and the like. Without loss of generality, in an implementation, a home location register (HLR) or a home subscriber server (HSS) may provide information about the subscribers to the VLR. In some scenarios, the core network element 134 may directly communicate with the VLR instead of HLR/HSS for performing handover function to any of node controllers associated with the MSC. Moreover, the VLR may be configured to be updated on a regular basis from the HLR/HSS. The HLR/HSS stores the subscriber record of all the subscribers (or users) associated with the mobile network 102 along with details of the MSC servicing the subscribers at that time.

In mobile networks such as the mobile network 102, geographic regions are divided into cells where each cell covers a specific geographical area. Each network element is configured to provide network coverage within a cell. Moreover, a cell corresponds to antenna coverage of a network element which transmits and receives radio broadcasts for the mobile network 102. As shown in the mobile network 102, each network element from among the network elements 104-108 may be configured to facilitate communication to at least one location area (or cell) from among the location areas 126-130. For example, the network element 104 may be configured to facilitate communication to the location area 126 associated with the users 110-114; the network element 106 may be configured to facilitate communication to the location area 128 associated with the users 116-120; and the network element 108 may be configured to facilitate communication to the location area 130 associated with the users 122 and 124. It is understood that, the network elements 104-108 may be configured to be installed or fixedly placed in their respective locations (*e.g*., the location areas 126-130) as transceivers for communicating with the user mobile devices of the users 110-124 over the one or more communication channels. It is also to be understood that the network elements 104-108, the users 110-124 and the location areas 126-130 may be associated with one or more mobile networks such as the mobile network 102.

During alert event scenarios such as an emergency event, a business need, a government broadcasting of information, and the like, the public alert system 136 may send alert messages to all the target users located in alert areas associated with the alert event scenarios. For example, if the location area 126 encounters an emergency event, the public alert system 136 may send alert messages to the users 110-114 on their mobile devices. In an example scenario, the public alert system 136 may send the alert messages to a large number of users via an SMS channel. In such a scenario, the public alert system 136 may send the alert messages via an SMS centre (SMSC) connected to the core network element 134 (such as an MSC). However, during such emergency events, mobile networks (such as the mobile network 102) may encounter network congestion due to bulk alert messages accumulated in the networks. Moreover, managing traffic for the bulk alert messages in the mobile networks during the alert events may be cumbersome for the mobile networks. Hence, a better technique is required to overcome such disadvantages and to manage traffic flow of alert messages efficiently during emergency events.

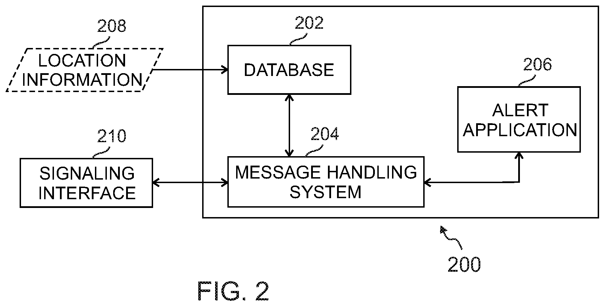

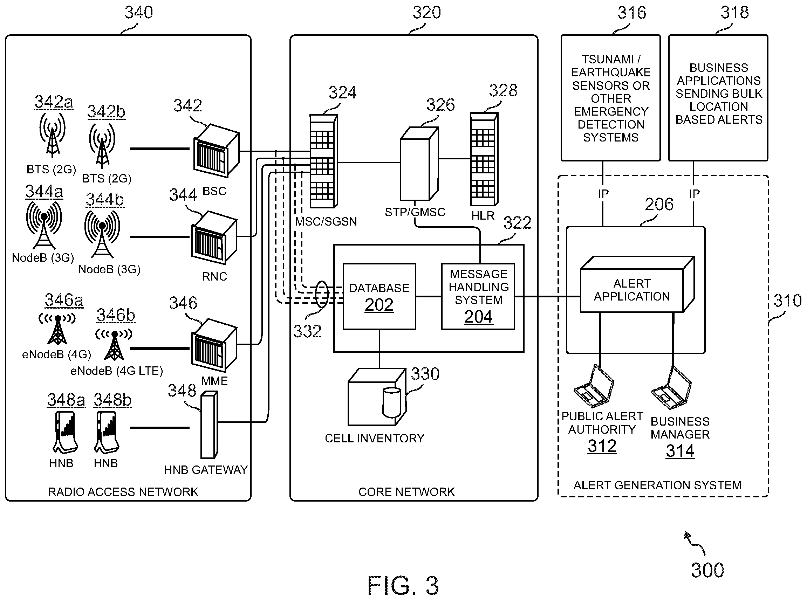

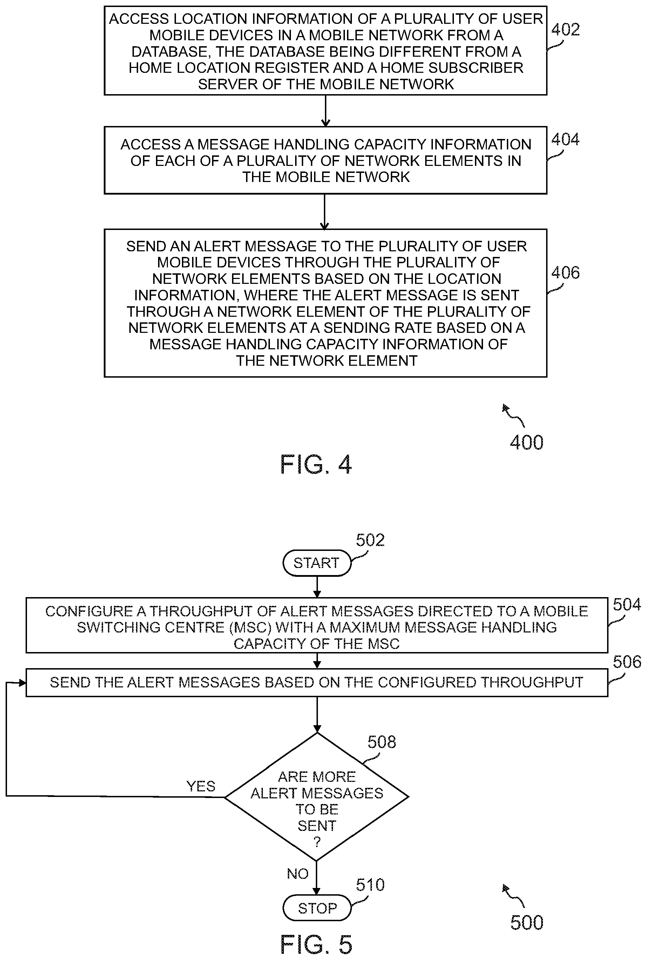

Various embodiments of the present invention provide systems and methods that are capable of overcoming these and other obstacles and providing additional benefits. More specifically, systems and methods disclosed herein enable managing flow of alert messages during an emergency event in a mobile network, thereby precluding formation of congestion in the mobile network. A public alert system for sending alert messages corresponding to an emergency event in a mobile network is explained with reference to FIGS. 2 and 3, and various example embodiments of method of controlling flow of alert message in the mobile network are described with reference to FIGS. 4 to 14.

FIG. 2 is a block diagram of a public alert system 200 for sending alert messages in a mobile network corresponding to an alert event, in accordance with an embodiment. The public alert system 200 may be any machine capable of executing a set of instructions (sequential and/or otherwise) so as to manage flow of alert messages. The public alert system 200 includes a database 202, a message handling system 204 and an alert application 206. The message handling system 204 is communicably coupled with the database 202 for accessing location and subscriber information stored in the database 202. In an embodiment, the message handling system 204 may include one or more processors (not shown in FIG. 2). It is understood that the public alert system 200 is depicted to include only one database, one message handling system and one alert application for example purposes and that the public alert system 200 may include fewer or more components than those depicted in FIG. 2. In an implementation, the database 202 may be a centralized database for all mobile networks, or several of such databases (*e.g*., the database 202) may be configured, where each database is dedicated to a distinct mobile network. It should further be noted that the public alert system 200 may be a distributed or a unified system. For instance, the alert application 206 may be configured in a device that is remote to the message handling system 204, and in some scenarios, the database 202 may also be configured in a device different than a device in which the massage handling system 204 is configured. In another example embodiment, the database 202, the massage handling system 204 and the alert application 206 are configured in a single device connected to a mobile network such as the mobile network 102.

In an embodiment, the message handling system 204 includes at least one memory capable of storing machine executable instructions, and one or more processors capable of executing the stored machine executable instructions for performing tasks such as static flow control of alert messages sent through the mobile network 102, signal coding, data processing, input/output processing, and/or other functions required for configuring the alert message and for controlling the flow of alert messages in a static manner sent through the mobile network 102. Examples of the memory include, but are not limited to, volatile and/or non-volatile memories. For instance, the memory may be volatile memory (*e.g*., registers, cache, RAM), non-volatile memory (*e.g*., ROM, EEPROM, flash memory, etc.), or some combination of the two. The memory stores software, for example, set of instructions that can, for example, implement the technologies described herein, upon execution. For example, the memory may be configured to store information, data, applications, instructions or the like for enabling the message handling system 204 to carry out various functions in accordance with various example embodiments.

In an embodiment, the one or more processors used in the message handling system 204 may be embodied as a multi-core processor, a single core processor, or a combination of one or more multi-core processors and one or more single core processors. For example, the one or more processors may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

In an embodiment, the database 202 is configured to collate data related to location information (*see*, 208) from a plurality of users (such as the users 110-124 depicted in FIG. 1) associated with the mobile network 102. In an embodiment, the database 202 may also collate data related to all subscribers (or users) associated with the mobile network 102. For example, by probing through one or more network elements (such as the network elements 104-108), information related to the users such as current location information, mobile device information, mobile station international subscriber directory number (MSISDN) of users associated with the mobile network, international mobile subscriber identity (IMSI) and the like, may be collated in the database 202. There are many ways by which the data related to the location information may be received from one or more location sources. Some examples of sourcing the location information may include, but are not limited to, integrating with probes installed on interfaces such as A-Interface, IuCS interface, IuPS interface, S1 interface, Abis interface, IuB interface, and the like; integrating with mobile positioning systems in the mobile network 102; integrating with MSC call data records (CDRs) with location events; and integrating with a VLR database (DB). In an embodiment, the database 202 may be configured to obtain information about the network elements that are currently servicing the user mobile devices. For example, network elements such as a BSC and a BTS may be determined for a particular user mobile device, where the BSC and the BTS are servicing the user mobile device.

In an embodiment, the location information may include information gleaned from geo-location tracking satellites and /or Wi-Fi sensors (for example in cars, stores, and the like). In an embodiment, the location information may be collected from a user's location and motion/travel/changes-in-location, based on cell phone data, Wi-Fi triangulation, global positioning system (GPS), and so on, via the network elements. For example, one or more interfaces may facilitate probing of the data from the one or more network elements. Examples of the interfaces for probing the one or more network elements may include but not limited to air interface (A- interface), IuPS (*e.g*., interface for packet switching networks) interface, IuCS (*e.g*., interface for circuit switching networks) interface, S1 interface and the like. In an embodiment, the location information corresponding to a mobile device also includes accessing information of network elements that are currently servicing the mobile device. For example, network elements that are currently servicing the mobile device may include, but not limited to, BTS, NodeB, eNodeB, femtocell, Home NodeB gateway (or HNB gateway), BSC, RNC, MME, MSC and SGSN.

Additionally or optionally, the one or more network elements and/or the mobile devices of the users 110-124 may also be configured to send the subscriber and location information 208 to the database 202. For example, upon detecting a change of location of a subscriber (or user), a network element in close proximity to the subscriber may update information about the change of location of the subscriber to the database 202. In another example, information may also be updated in the database 202, if the subscriber has modified one or more credentials associated with the mobile network 102, such as information related to a new MSISDN number for the same subscriber, updated address information of the subscriber, updated mobile device information and the like. Further, the mobile devices of the users 110-124 can directly or indirectly communicate with the database 202 to update about the current location information including the network element(s) currently servicing the mobile devices.

In an example embodiment, the public alert system 200 is configured to access 'message handling capacity information' of individual network elements of the mobile network 102. In an example embodiment, the public alert system 200 may pre-store the message handling capacity information of each network element of the mobile network 102. In another example embodiment, the public alert system 200 may receive the message handling capacity information of each network element from the mobile network 102. It should further be noted that any change or update in the message handling capacity information of individual network elements, or a group of network elements, or installation (or configuration) of new network elements or removal of existing network elements, may be periodically (or non-periodically depending upon a time of change) notified to the public alert system 200. The message handling capacity information includes a message handling capacity of a network element that may be measured based on a number of transactions (*e.g*., transaction of messages, calls etc.) the network element can handle in a given time interval (*e.g*., in one second). For example, if an MSC can handle 5000 SMS/second, then its capacity information of 5000 SMS/second will be stored in form of the message handling capacity information. In an example embodiment, the message handling capacity information may be stored in the database 202 or in a memory in the message handling system 204.

In an example embodiment, the public alert system 200 is configured to access 'network resource capacity information' associated with the mobile network 102. In an embodiment, the network resource capacity information may include, but is not limited to, information of a number of paging requests per location area or paging capacity per cell site (such as BTS, NodeB, eNodeB, Home NodeB etc.). The network resource capacity information for a resource used in sending the alert message via the mobile network 102 may be measured based on a number of paging requests that can be handled by the resource in a given time interval (*e.g*., in one second). For example, if a location area code (LAC) can handle 500 paging requests per second, then its capacity of 500 paging requests per second will be stored in form of the network resource capacity information. In an example embodiment, the network resource capacity information may be stored in the database 202 or in the message handling system 204.

In an embodiment, the alert application 206 is configured to facilitate public alert authorities for feeding/creating alert messages associated with an alert event. The alert application 206 is configured to facilitate the authorities to create an alert message for an alert area. In an example embodiment, the alert application 206 may be associated with one or more alert event detection sensors such as sensors for warning about a tsunami or an earthquake and the like. Upon detection of the alert event from the one or more sensors (*e.g*., over an Internet protocol (IP)), the alert application 206 may create the alert message (*e.g*., from pre-stored alert messages in the alert application 206) accordingly. Additionally or optionally, the alert application 206 may also receive input from the public alert authorities so as to create a suitable alert message. The alert application 206 may be installed or employed in a device having user interface to create the alert message, and has communication capabilities to communicate with the device embodying the message handling system 204. The user interface employed in the alert application 206 may include, but is not limited to, an input interface and/or an output interface. Examples of the input interface may include, but are not limited to, a keyboard, a mouse, a joystick, a keypad, a touch screen, soft keys, a microphone, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, a device embodying the alert application 206 includes one or more processors configured to control one or more functions of one or more elements of the alert application 206 through computer program instructions, for example, software and/or firmware, stored on a memory, accessible to the one or more processors.

In an example scenario, during an alert event such as flash floods, tsunami, tornadoes, severe rain storms, earthquakes and the like, a public alert authority may create an alert message so as to be sent to all subscribers associated with one or more alert areas corresponding to the alert event. An alert area indicates the location area where the intended alert messages needs to be disseminated. The alert area may be as small as coverage area of a single cell site (such as a cell coverage corresponding to each network element (*e.g*., BTS, NodeB, eNodeB, Home NodeB or femtocell site)) to as large as the complete mobile network. In an embodiment, the authority may create and send the alert messages to the subscribers using an application installed in mobile devices associated with the subscribers. For example, during an alert event, an authority managing control of the alert event may send alert messages to the users using an application (such as a mobile application or other native applications). In an example embodiment, the authority may send the created alert message via any suitable application to the alert application 206 using an internet protocol or any other transport layer protocols.

In an embodiment, the message handling system 204 is configured to receive the alert message from the alert application 206 to be sent to a plurality of users corresponding to the alert area. Moreover, each alert message includes alert information for warning the plurality of users of the corresponding alert area of the alert event. For example, if the alert event corresponds to an earthquake for an alert area, then alert information may be of form "This is an emergency alert: A major earthquake has occurred in this area. Please move to an open area if you can safely do so. Avoid buildings, power lines, trees, and other hazards. Assume all power lines are live. Listen for and be prepared to follow further instructions." Accordingly, alert messages may be created based on the alert information and sent to the users in the earthquake affected alert area. In another example, in case of a business alert message, alert information may be of the form "XYZ company is aware of the new business event that is scheduled to impact offices today. We will continue to monitor the situation and reach out to the appropriate managers as needed. Please check with your immediate supervisor for additional response information, and call +1 XXX-XXX-XXXX (where X denotes an integral number between 0 and 9) or check back for updates." Accordingly, business alert messages may be created based on the alert information and sent to the appropriate employees in their respective offices.

An example of sending alert messages and static flow control of the alert messages in the mobile network 102 to avoid congestion in the mobile network is herein provided. In an embodiment, the message handling system 204 is configured to access location information (along with subscriber information) of mobile devices of a plurality of users in the mobile network 102 from the database 202. More specifically, the message handling system 204 is configured to obtain the location information 208 corresponding to the alert area from the database 202. Moreover, accessing the location information corresponding to a mobile device includes accessing information of network elements that are currently servicing the mobile device.

In an embodiment, the message handling system 204 is configured to access a 'message handling capacity information' corresponding to each of the plurality of network elements in the mobile network 102. Further, in an embodiment, the message handling system 204 is also configured to access the 'network resource capacity information' associated with the mobile network 102. In an embodiment, the message handling system 204 is configured to send bulk alert messages through a network element (N1) of the mobile network 102 based on one or more of the location information, a message handling capacity information of the network element (N1) and a network resource capacity information of resources associated with the network element (N1).

In an example, a number of alert messages that can be sent through the network element (N1) in a given time frame (*e.g*., a second) can be referred to as 'sending rate' of the alert messages. In an example embodiment, the sending rate of alert messages through the network element (N1) depends upon the message handling capacity (obtained from the message handling capacity information corresponding to the network element (N1)). For example, if the maximum message handling capacity of a given BTS is 1000 SMS/second, then the sending rate of alert messages through the given BTS is set at 1000 SMS/second. Further, based on changes in the maximum message handling capacity information of the given BTS, the sending rate of the alert messages through the given BTS is adjusted. Various examples of sending the alert messages through a variety of network elements of a mobile network are further described with reference to FIGS. 5 to 14.

In an embodiment, the message handling system 204 is configured to send the alert messages associated with the alert area via one or more signaling interfaces, for example, a signaling interface 210. The signaling interface 210 is configured to send messages (such as the alert messages) to the one or more network elements associated with the mobile network 102. Additionally, the signaling interface 210 may also send control information along with the alert messages. For example, the message handling system 204 may include control information specifying a location area code (such as corresponding to an alert area) or information about a particular network element to which the alert message needs to be delivered. The signaling interface 210 may include, but not limited to, interfaces in accordance with telephony signal protocols such as Signaling System No. 7 (SS7), Signal User Adaptation (SUA), Message Transfer Part 3 User Adaptation (M3UA), and the like. One such implementation of the public alert system 200 is explained with reference to FIG. 3.

FIG. 3 shows a schematic block diagram 300 of public alert system for sending alert messages to users in a mobile network, in accordance with an embodiment. The schematic diagram 300 includes an alert generation system 310 including the alert application 206 configured to create suitable alert messages for sending the alert messages to a plurality of users associated with a mobile network (*e.g.*, the mobile network 102) corresponding to an alert area during an alert event. In an example scenario, a public alert authority (*see*, 312) may be configured to create an alert message using the alert application 206 based on an alert area (such as location areas 126-130 depicted in FIG. 1). In another scenario, a business manager associated with a business team (*see*, 314) may create an alert message using the alert application 206 based on a location area information. In yet another scenario, the alert application 206 may be associated with one or more sensors related to emergency detection systems (*see*, 316) such as sensors for warning about a tsunami or an earthquake and the like. Upon detection of an emergency event from the one or more sensors (for example, over an Internet protocol (IP)), the alert application 206 may create an alert message (for example, from pre-stored alert messages in the alert application 206) accordingly. The alert application 206 may also receive input from business applications (*see*, 318) and create alert message for a business team based on the location information.

In an embodiment, the alert application 206 upon creating the alert message (*e.g*., an SMS) is configured to send the alert message to a core network 320. The core network 320 includes a public alert system 322 that may be an example of the public alert system 200. In an embodiment, the public alert system 322 is configured to include the database 202 and the message handling system 204 explained with reference to FIG. 2. The database 202 in the public alert system 322 is configured by integrating with one or more location sources in the mobile network and the database 202 is different from an HLR 328 of the mobile network, and is configured to store subscriber records of individual user (*e.g*., location information of the individual user and information of network elements currently servicing the individual user). For instance, the database 202 is configured to store (and dynamically update) the 'location information' of mobile devices of the plurality of users in the mobile network, for example, current location information of the user devices or GPS information, MSISDN numbers, IMSI and the like of the mobile devices of the users. The location information for a typical mobile device is also stored in the database 202 along with information of network elements currently servicing the mobile device. The database 202 is configured to receive the location information and information of network elements from the elements of the mobile network (*see*, 332).

In an embodiment, the message handling system 204 of the public alert system 322 is also configured to access information corresponding to a message handling capacity of each network element (*i.e.* message handling capacity information) of the mobile network. In an example embodiment, based on a message handling capacity of a network element (*e.g.*, N1), the sending rate of the alert messages through the network element N1 (such as a network element from among the network elements 324, 342, 344, 346, 348, 342a, 342b, 344a, 344b, 346a, 346b, 348a, 348b) is controlled by the message handling system 204. Various examples of the static flow control of alert messages (*e.g*., sending rate of the alert messages) through various types of network elements are further described with reference to FIGS. 5 to 14.

In an example embodiment, the message handling system 204 is configured to deliver the bulk alert messages from the alert application 206 to the MSC/SGSN 324 (hereinafter also individually referred as MSC 324 or SGSN 324) via a router such as a signal transfer point (STP) or a gateway mobile switching centre (GMSC) (*see*, 326). The STP/GMSC router 326 is configured to route the alert messages to appropriate destinations, and is configured to facilitate address translation while routing the alert messages to the appropriate destinations. As shown in FIG. 3, the STP/GMSC router 326 is also shown to be connected to the HLR/HSS 328 (hereinafter referred to as the 'HLR 328'). As explained in FIG. 1, the HLR 328 is configured to store information about all the subscribers associated with the MSC/SGSN 324. Further, the core network 320 includes a cell inventory 330. The cell inventory 330 includes cell inventory information related to a number of cells covering a particular area. For example, the cell inventory 330 includes information including, but not limited to, Cell ID, Cell Location Latitude/Longitude, Cell coverage information, location area code (LAC) under which the Cell ID is grouped, BSC/RNC/MME to which the Cell ID is connected, and MSC/SGSN associated with the Cell ID.

In an embodiment, the MSC/SGSN 324 is configured to locate one or more node controllers based on the information received from the database 202 of the public alert system 322. For example, based on information about an alert area associated with the bulk alert messages received from the alert application 206, the MSC/SGSN 324 may find network elements from a radio access network such as a radio access network 340 shown in the schematic diagram 300. The MSC/SGSN 324 is shown to as connected to network elements such as the BSC 342, the RNC 344, the MME 346 and the HNB gateway 348 (also known as a 3G femtocell or Small Cell) for sending the alert messages to these network elements. It should be understood that the MSC/SGSN 324 is shown to have associated with four network elements as node controllers (342-348) for example purposes only, and that the MSC/SGSN 324 may be associated with fewer or more number of node controllers than those depicted in FIG. 3.

In an embodiment, each of the network elements 342-348 may be associated with one or more network elements such as corresponding base stations depending upon cellular technologies. For example, the BSC 342 is depicted to be associated with 2G based network elements BTS 342a and BTS 342b; the RNC 344 is depicted to be associated with 3G based network elements NodeB 344a and NodeB 344b; the MME 346 is depicted to be associated with 4G based network elements eNodeB 346a and eNodeB 346b; and the HNB gateway 348 is depicted to be associated with 3G based network elements HNB 348a and HNB 348b, as shown in the radio access network 340 respectively. Each of the network elements, for example, the MSC 324, the node controllers (342-348), the base stations (342a-348b) has a maximum message handling capacity and this information is accessible to the message handling system 204 in form of message handling capacity information of the each network element. For example, the message handling system 204 may have access to message handling capacity information of the BTS 342a, for example, the BTS 342a may have a maximum message handling capacity of 100 SMSs (or alert messages) per second.

In an embodiment, for controlling of the sending rate of the alert messages through a network element such as the network element 342a to avoid network congestion, the alert messages are sent through the network element 342a with an allocated message sending rate (*e.g.*, a maximum message handling capacity of the network element 342a). As explained with reference to FIG. 2, the sending rate of the alert messages through the network element 342a is adjusted based on at least one of the message handling capacity information and the network resource capacity information.

It should be noted that in various example embodiments, the public alert system 322 does not query the HLR 328 (*e.g*., bypasses the HLR 328) for retrieving information such as the location information and the subscriber information corresponding to the sending of the alert messages. More specifically, the MSC/SGSN 324 is provided with the location information directly from the message handling system 204 by accessing the location information already stored in the database 202, instead of querying the HLR 328.

FIG. 4 illustrates a flow diagram of an example method 400 for static flow control of alert messages in accordance with an example embodiment. The method 400 depicted in the flow diagram may be executed by, for example, the public alert system 200 or 322 explained with reference to FIGS. 2 and 3. Operations of the flow diagram, and combinations of operation in the flow diagram, may be implemented by, for example, hardware, firmware, a processor, circuitry and/or a different device associated with the execution of software that includes one or more computer program instructions. It is also noted that, the operations of the method 400 can be practiced by using a system having configurations other than the public alert system 200 or 322 as well. The method 400 starts at operation 402.

At operation 402, location information of a plurality of user mobile devices in a mobile network is accessed from a database, for example, the database 202. In an embodiment, the database is configured by integrating with one or more location sources in the mobile network and the database is different from a 'home location register (HLR)' and a 'home subscriber server (HSS)' of the mobile network. More specifically, upon occurrence of an alert event, the plurality of user mobile devices associated with a plurality of users is identified in an alert area associated with the mobile network. Examples of a user mobile device may include, but is not limited to a cellular phone, a Smartphone, a tablet device, a laptop computer and the like. As explained with reference to FIGS. 2 and 3, accessing the location information corresponding to a user mobile device of the plurality of user mobile devices further includes accessing information of network elements that are servicing the mobile device. Examples of a network element may include, but is not limited to an MSC/SGSN, a BSC, an RNC, an MME, a BTS, a NodeB, an eNodeB, a femtocell site, a femtocell gateway (or HNB gateway) and the like.

Moreover, accessing of the location information includes fetching the location information from a database (such as the database 202 explained in FIGS. 2 and 3) as well as network elements servicing the user mobile devices, where the location information of the plurality of user mobile devices is stored in the database. In an example, the database may be configured to obtain location information as well as information about the network elements from the node controllers. For example, the node controller may be a BSC controlling one or more BTS; or an RNC controlling one or more 3G nodes (NodeB); or an MME controlling one or more 4G nodes (eNodeB); or an HNB gateway for controlling one or more home NodeB (HNB). In an example embodiment, the location information may be collated from one or more network elements associated with the mobile device. In another example embodiment, the location information of a user mobile device may include information gleaned from geo-location tracking satellites and /or Wi-Fi sensors (for example as installed in cars, stores, and the like). Further, the location information of the user mobile device may also be collected from a user's location and motion/travel/changes-in-location, based on cell phone data, Wi-Fi triangulation, global positioning system (GPS), and so on, via one or more network elements. For example, one or more interfaces may facilitate probing of the data from the one or more network elements. Examples of the interfaces for probing the one or more network elements may include, but are not limited to air interface (A-interface), IuPS (for packet switching networks) interface, IuCS (for circuit switching networks) interface, IuB interface (between the RNC and the Node B), IuR interface (between RNCs in same network), S1 interface, Abis interface, IuH Interface (between HNB and HNB gateway), and the like.

At operation 404, a message handling capacity information corresponding to each of a plurality of network elements in the mobile network is accessed. The message handling capacity information represents a message handling capacity of each network element. In an example embodiment, the message handling capacity of a network element may be measured based on a number of transactions (*e.g*., transaction of messages) the network element can handle in a given time interval. For example, if an MSC can handle 5000 SMS/ second, then its message handling capacity of 5000 SMS/sec will be stored in the database or in some other storage accessible to the message handling system in form of message handling capacity information of the MSC. As explained in FIG. 2, the MSC/SGSN may be configured to locate a right network element (for example, the BSC, the RNC, the MME and the like) associated with the alert area based on paging requests. More specifically, the MSC/SGSN is configured to send paging requests to all the network elements associated with the MSC/SGSN and then identify at least one network element corresponding to the alert area from among the network elements based on the sent paging requests. In an embodiment, the MSC/SGSN bypasses a HLR or a HSS for retrieving location information corresponding to the alert area where the alert messages needs to be sent, as the location information is readily available as stored in the database or otherwise accessible to the message handling system. More specifically, the message handling system is configured such that information about the subscribers is directly sourced from the one or more location sources in the mobile network, and the sourced information is stored in the database. Accordingly, the subscribers' information stored in the database is used instead of looking up in the HLR or the HSS, thereby bypassing the HLR or HSS. In an embodiment, network resource capacity information associated with the mobile network is also accessed. In an example, the network resource capacity corresponds to a number of paging requests per location area or paging capacity per cell site (such as BSC, RNC, MME, BTS, NodeB, eNodeB, HNB gateway etc.).

At operation 406, an alert message is sent to the plurality of user mobile devices through the plurality of network elements based on the location information. The alert message is sent through the plurality of network elements as per individual message handling capacity of network elements of the plurality of network elements. For instance, sending rate of the alert messages through a given network element (*e.g*., sending rate of the alert messages directed to the given network element) may be based on an allocated message sending rate for the given network element. In an example embodiment, the allocated message sending rate is a maximum message sending rate for any network element of the plurality of network elements. The alert message may be created using a user interface in the alert application 206 explained with reference to FIGS. 2 and 3. The number of alert messages that needs to be sent through the mobile network depends upon a number of users in the alert area. As explained in FIG. 2, the alert messages are sent by directing the alert messages to the one or more network elements of the mobile network.

In an example embodiment, the sending of the alert messages also includes sending the alert messages to a group of network elements at an allocated message handling capacity of the group of network elements for an alert messaging. The determination of the allocated message handling capacity of the group of network elements is based on the message handling capacity information corresponding to each network element of the group of network elements. Further, the sending of the alert messages includes sending the alert message to the plurality of user mobile devices through the group of network elements based on the network resource capacity information. In an example embodiment, a set of similar network components (*e.g.*, MSC1, MSC2 and MSC3) with equal message handling capacities can be classified as a group of network elements, and a common message handling capacity defined for the group of network elements is applicable for all of the network components in the group of network elements. Accordingly, in this example embodiment, a common message handling capacity information may be stored for the group of network elements.

Some example embodiments of controlling flow of alert messages directed to network elements are further described with reference to FIGS. 5 to 14

FIG. 5 illustrates a flow diagram of an example method 500 for static flow control of alert messages directed to the MSC 324 in accordance with an example embodiment. The method 500 depicted in the flow diagram may be executed by, for example, the public alert systems 200 or 322 explained with reference to FIGS. 2 and 3. Operations of the flow diagram, and combinations of operation in the flow diagram, may be implemented by, for example, hardware, firmware, a processor, circuitry and/or a different device associated with the execution of software that includes one or more computer program instructions. It is also noted that, the operations of the method 500 can be described and/or practiced by using a system having configurations other than the public alert systems 200 or 322 as well. The method 500 starts at operation 502.

As explained with reference to FIG. 2, upon occurrence of an alert event, mobile devices of a plurality of users are identified in an alert area of the mobile network. Accordingly, an alert message may be created using a user interface in the alert application 206. Hence, a number of alert messages (for example, copies of the alert message) that needs to be sent depend upon the number of users associated within the alert area. In an embodiment, a throughput value of the alert messages may correspond to a sending rate (such as the sending rate explained in FIGS. 2 - 4) related to the maximum message handling capacity of the at least one network element, for example, the MSC 324.

At operation 504, a throughput value (sending rate) of alert messages directed to the MSC 324 is configured with a maximum message handling capacity of the MSC 324. For example, if the maximum message handling capacity of alert messages by the MSC 324 is 5000 SMS/second, the throughput value of alert messages directed to the MSC 324 is configured at 5000 SMS/second. It should be noted that in another example embodiment, the configured throughput value may be a value slightly lower than the maximum message handling capacity and it may be configured based on a network behavior for the alerts that need to be created. For example, the configured throughput value may be set to 4500 SMS/sec instead of 5000 SMS/second.

At operation 506, the alert messages are directed to the MSC 324 at the throughput value so as to provide the alert message to the user mobile devices associated with the MSC 324.

At operation 508, it is determined if more alert messages needs to be sent through the MSC 324. For example, if the alert message needs to be sent to 25000 subscribers (or users), then it is determined if the alert message is sent to all of the 25000 subscribers. If it is determined that more alert messages needs to be sent to the MSC 324, the method 500 again proceeds to 506 to send the alert message to remaining user mobile devices associated with the MSC 324 in the alert area. At operation 510, all operations are terminated or ended, if it is determined that the alert message has been sent to all of the 25000 subscribers.

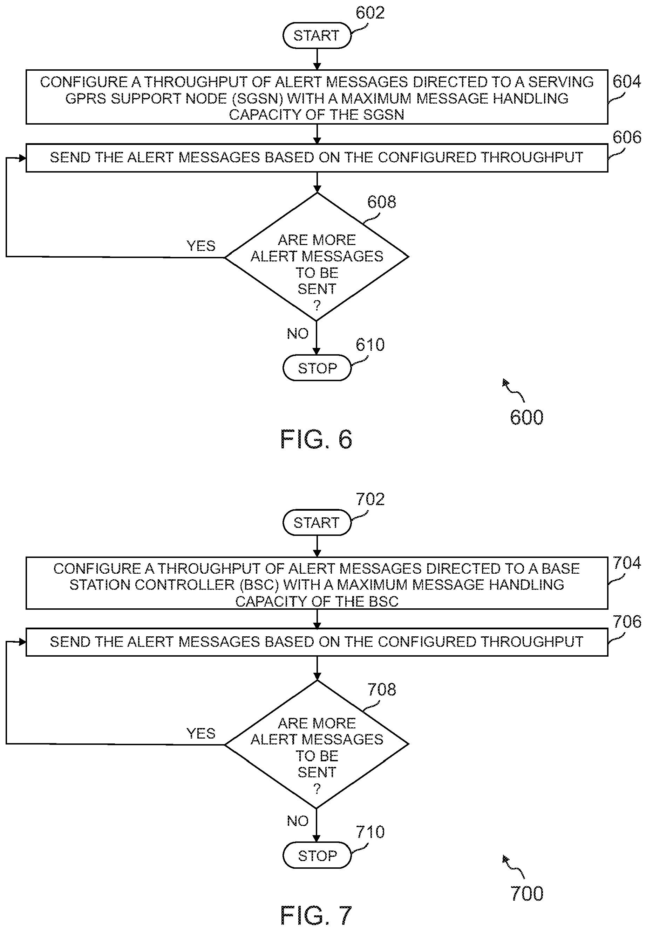

In an example embodiment, the public alert system (200 or 322) can perform a static flow control for each individual MSC in the mobile network, or for a group of MSCs in the mobile network. For example, a set of MSCs with similar message handling capacity can be identified as a 'group of MSCs', and a message handling capacity defined for the group of MSCs' is applicable for all MSCs in the group of MSCs. For example, if MSCx, MSCy and MSCz are grouped as MSCGroupl and the message handling capacity of MSCGroupl capacity is configured as 4000SMS/Sec, the algorithm of the method 500 considers each MSC in the group MSCGroupl having a message handling capacity of 4000SMS/Sec. Accordingly, throughput of each of the MSC in the MSCGroupl is initialized based on the maximum handling capacity at operation 504. Another example flow diagram for static flow control of alert messages directed to the SGSN 324 is explained in FIG. 6.

FIG. 6 illustrates a flow diagram of an example method 600 for static flow control of alert messages directed to the SGSN 324 in accordance with an example embodiment. The method 600 starts at operation 602.

At operation 604, a throughput value (sending rate) of alert messages directed to the SGSN 324 is configured with a maximum message handling capacity of the SGSN 324. For example, if the maximum message handling capacity of alert messages by the SGSN 324 is 5000 SMS/second, the throughput value of alert messages directed to the SGSN 324 is configured at 5000 SMS/second. It should be noted that in another example embodiment, the configured throughput value may be a value slightly lower than the maximum message handling capacity and it may be configured based on a network behavior for the alerts that need to be created. For example, the configured throughput value may be set to 4500 SMS/sec instead of 5000 SMS/second.

At operation 606, the alert messages are directed to the SGSN 324 at the throughput value so as to provide the alert message to the user mobile devices associated with the SGSN 324.

At operation 608, it is determined if more alert messages needs to be sent through the SGSN 324. For example, if the alert message needs to be sent to 25000 subscribers (or users), then it is determined if the alert message is sent to all of the 25000 subscribers. If it is determined that more alert messages needs to be sent to the SGSN 324, the method 600 again proceeds to 606 to send the alert message to remaining user mobile devices associated with the SGSN 324 in the alert area. At operation 610, all operations are terminated or ended, if it is determined that the alert message has been sent to all of the 25000 subscribers.

In an example embodiment, the public alert system (200 or 322) can perform a static flow control for each individual SGSN in the mobile network, or for a group of SGSNs in the mobile network. For example, a set of SGSNs with similar message handling capacity can be identified as a 'group of SGSNs', and a message handling capacity defined for the group of SGSNs is applicable for all SGSNs in the group of SGSNs'. For example, if SGSNx, SGSNy and SGSNz are grouped as SGSNGroupl and the message handling capacity of SGSNGroupl capacity is configured as 4000 SMS/Sec, the algorithm of the method 600 considers each SGSN in the group SGSNGroupl having a message handling capacity of 4000 SMS/Sec. Accordingly, throughput of each of the SGSN in the SGSNGroupl is initialized based on the maximum handling capacity at operation 604.

Another example flow diagram for static flow control of alert messages directed to the BSC 342 is explained in FIG. 7.

FIG. 7 illustrates a flow diagram of an example method 700 for static flow control of alert messages directed to the BSC 342 in accordance with an example embodiment. The method 700 starts at operation 702.

At operation 704, a throughput value (sending rate) of alert messages directed to the BSC 342 is configured with a maximum message handling capacity of the BSC 342. For example, if the maximum message handling capacity of alert messages by the BSC 342 is 1500 SMS/second, the throughput value of alert messages directed to the BSC 342 is configured at 1500 SMS/second. It should be noted that in another example embodiment, the configured throughput value may be a value slightly lower than the maximum message handling capacity and it may be configured based on a network behavior for the alerts that need to be created. For example, the configured throughput value may be set to 1300 SMS/sec instead of 1500 SMS/second.

At operation 706, the alert messages are directed to the BSC 342 at the throughput value so as to provide the alert message to the user mobile devices associated with the BSC 342.

At operation 708, it is determined if more alert messages needs to be sent through the BSC 342. For example, if the alert message needs to be sent to 9000 subscribers (or users), then it is determined if the alert message is sent to all of the 9000 subscribers. If it is determined that more alert messages need to be sent to the BSC 342, the method 700 again proceeds to 706 to send the alert message to remaining user mobile devices associated with the BSC 342 in the alert area. At operation 710, all operations are terminated or ended, if it is determined that the alert message has been sent to all of the 9000 subscribers.

In an example embodiment, the public alert system (200 or 322) can perform a static flow control for each individual BSC in the mobile network, or for a group of BSCs in the mobile network. For example, a set of BSCs with similar message handling capacity can be identified as a 'group of BSCs', and a message handling capacity defined for the group of BSCs is applicable for all BSCs in the group of BSCs. For example if BSCx, BSCy and BSCz are grouped as BSCGroup1 and the message handling capacity of BSCGroup1 capacity is configured as 1500 SMS/Sec, the algorithm of the method 700 considers each BSC in the group BSCGroup1 having a message handling capacity of 1500 SMS/Sec. Accordingly, throughput of each of the BSC in the BSCGroup1 is initialized based on the maximum handling capacity at operation 704.

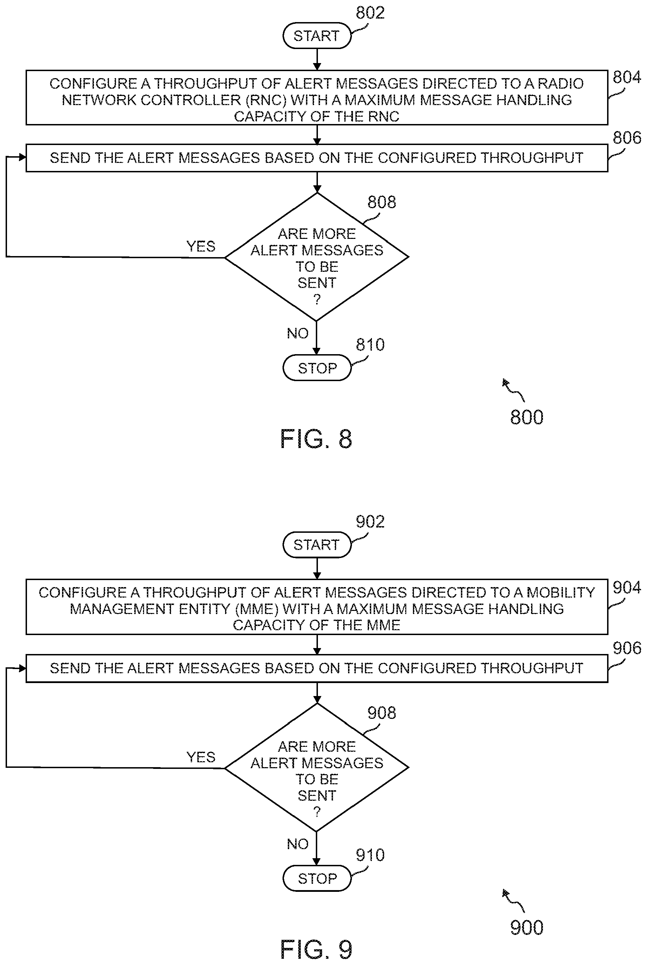

Another example flow diagram for static flow control of alert messages directed to the RNC 344 is explained in FIG. 8.

FIG. 8 illustrates a flow diagram of an example method 800 for static flow control of alert messages directed to the RNC 344 in accordance with an example embodiment. The method 800 starts at operation 802.

At operation 804, a throughput value (sending rate) of alert messages directed to the RNC 344 is configured with a maximum message handling capacity of the RNC 344. For example, if the maximum message handling capacity of alert messages by the RNC 344 is 1500 SMS/second, the throughput value of alert messages directed to the RNC 344 is configured at 1500 SMS/second. It should be noted that in another example embodiment, the configured throughput value may be a value slightly lower than the maximum message handling capacity and it may be configured based on a network behavior for the alerts that need to be created. For example, the configured throughput value may be set to 1300 SMS/sec instead of 1500 SMS/second.

At operation 806, the alert messages are directed to the RNC 344 at the throughput value so as to provide the alert message to the user mobile devices associated with the RNC 344.

At operation 808, it is determined if more alert messages needs to be sent through the RNC 344. For example, if the alert message needs to be sent to 9000 subscribers (or users), then it is determined if the alert message is sent to all of the 9000 subscribers. If it is determined that more alert messages need to be sent to the RNC 344, the method 800 again proceeds to 806 to send the alert message to remaining user mobile devices associated with the RNC 344 in the alert area. At operation 810, all operations are terminated or ended, if it is determined that the alert message has been sent to all of the 9000 subscribers.

In an example embodiment, the public alert system (200 or 322) can perform a static flow control for each individual RNC in the mobile network, or for a group of RNCs in the mobile network. For example, a set of RNCs with similar message handling capacity can be identified as a 'group of RNCs', and a message handling capacity defined for the group of RNCs is applicable for all RNCs in the group of RNCs. For example, if RNCx, RNCy and RNCz are grouped as RNCGroup1 and the message handling capacity of RNCGroup1 capacity is configured as 1500 SMS/Sec, the algorithm of the method 800 considers each RNC in the group RNCGroup1 having a message handling capacity of 1500 SMS/Sec. Accordingly, throughput of each of the RNC in the RNCGroup1 is initialized based on the maximum handling capacity at operation 804.

Another example flow diagram for static flow control of alert messages directed to the MME 346 is explained in FIG. 9.

FIG. 9 illustrates a flow diagram of an example method 900 for static flow control of alert messages directed to the MME 346 in accordance with an example embodiment. The method 900 starts at operation 902.

At operation 904, a throughput value (sending rate) of alert messages directed to the MME 346 is configured with a maximum message handling capacity of the MME 346. For example, if the maximum message handling capacity of alert messages by the MME 346 is 1500 SMS/second, the throughput value of alert messages directed to the MME 346 is configured at 1500 SMS/second. It should be noted that in another example embodiment, the configured throughput value may be a value slightly lower than the maximum message handling capacity and it may be configured based on a network behavior for the alerts that need to be created. For example, the configured throughput value may be set to 1300 SMS/sec instead of 1500 SMS/second.

At operation 906, the alert messages are directed to the MME 346 at the throughput value so as to provide the alert message to the user mobile devices associated with the MME 346.

At operation 908, it is determined if more alert messages needs to be sent through the MME 346. For example, if the alert message needs to be sent to 9000 subscribers (or users), then it is determined if the alert message is sent to all of the 9000 subscribers. If it is determined that more alert messages need to be sent to the MME 346, the method 900 again proceeds to 906 to send the alert message to remaining user mobile devices associated with the MME 346 in the alert area. At operation 910, all operations are terminated or ended, if it is determined that the alert message has been sent to all of the 9000 subscribers.

In an example embodiment, the public alert system (200 or 322) can perform a static flow control for each individual MME in the mobile network, or for a group of MMEs in the mobile network. For example, a set of MMEs with similar message handling capacity can be identified as a 'group of MMEs', and a message handling capacity defined for the group of MMEs is applicable for all MMEs in the group of MMEs. For example, if MMEx, MMEy and MMEz are grouped as MMEGroup1 and the message handling capacity of MMEGroup1 capacity is configured as 1500 SMS/Sec, the algorithm of the method 900 considers each MME in the group MMEGroup1 having a message handling capacity of 1500 SMS/Sec. Accordingly, throughput of each of the MME in the MMEGroup1 is initialized based on the maximum handling capacity at operation 904.

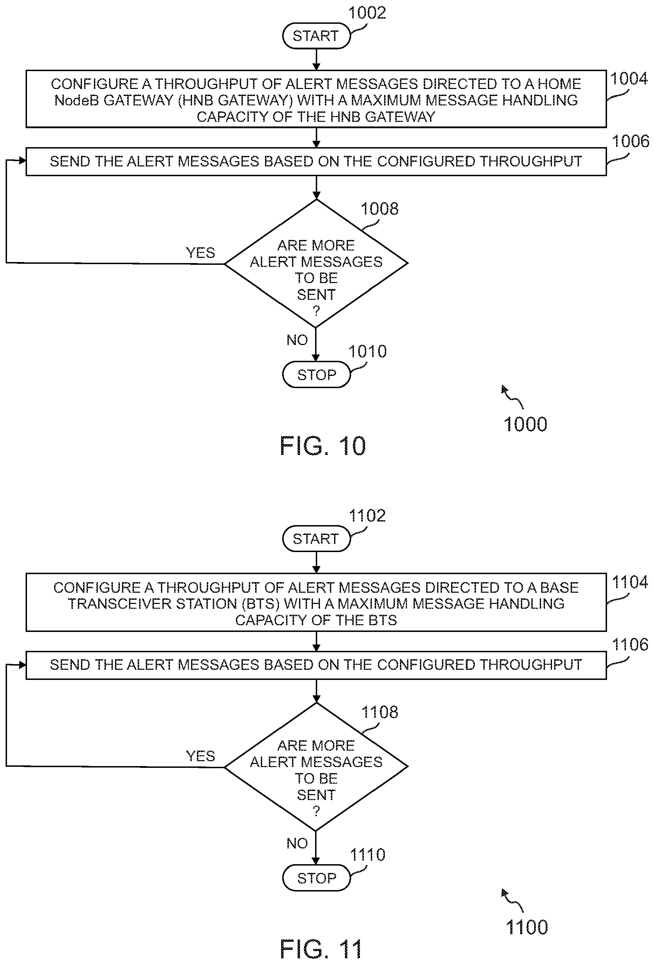

Another example flow diagram for static flow control of alert messages directed to the HNB gateway 348 is explained in FIG. 10.

FIG. 10 illustrates a flow diagram of an example method 1000 for static flow control of alert messages directed to the HNB gateway 348 in accordance with an example embodiment. The method 1000 starts at operation 1002.

At operation 1004, a throughput value (sending rate) of alert messages directed to the HNB gateway 348 is configured with a maximum message handling capacity of the HNB gateway 348. For example, if the maximum message handling capacity of alert messages by the HNB gateway 348 is 1500 SMS/second, the throughput value of alert messages directed to the HNB gateway 348 is configured at 1500 SMS/second. It should be noted that in another example embodiment, the configured throughput value may be a value slightly lower than the maximum message handling capacity and it may be configured based on a network behavior for the alerts that need to be created. For example, the configured throughput value may be set to 1300 SMS/sec instead of 1500 SMS/second.

At operation 1006, the alert messages are directed to the HNB gateway 348 at the throughput value so as to provide the alert message to the user mobile devices associated with the HNB gateway 348.

At operation 1008, it is determined if more alert messages needs to be sent through the HNB gateway 348. For example, if the alert message needs to be sent to 9000 subscribers (or users), then it is determined if the alert message is sent to all of the 9000 subscribers. If it is determined that more alert messages need to be sent to the HNB gateway 348, the method 1000 again proceeds to 1006 to send the alert message to remaining user mobile devices associated with the HNB gateway 348 in the alert area. At operation 1010, all operations are terminated or ended, if it is determined that the alert message has been sent to all of the 9000 subscribers.

In an example embodiment, the public alert system (200 or 322) can perform a static flow control for each individual HNB gateway in the mobile network, or for a group of HNB gateways in the mobile network. For example, a set of HNB gateways with similar message handling capacity can be identified as a 'group of HNB gateways', and a message handling capacity defined for the group of HNB gateways is applicable for all HNB gateways in the group of HNB gateways. For example if HNB gateway x, HNB gateway y and HNB gateway z are grouped as HNB gateway Group 1 and the message handling capacity of HNB gateway Group1 is configured as 1500 SMS/Sec, the algorithm of the method 1000 considers each HNB gateway in the group HNB gateway Group1 having a message handling capacity of 1500 SMS/Sec. Accordingly, throughput of each of the HNB gateway in the HNB gateway Group1 is initialized based on the maximum handling capacity at operation 1004.

Another example flow diagram for static flow control of alert messages directed to the BTS 342a or BTS 342b is explained in FIG. 11.

FIG. 11 illustrates a flow diagram of an example method 1100 for static flow control of alert messages directed to the BTS 342a in accordance with an example embodiment. The method 1100 starts at operation 1102.

At operation 1104, a throughput value (sending rate) of alert messages directed to the BTS 342a is configured with a maximum message handling capacity of the BTS 342a. For example, if the maximum message handling capacity of alert messages by the BTS 342a is 300 SMS/second, the throughput value of alert messages directed to the BTS 342a is configured at 300 SMS/second. It should be noted that in another example embodiment, the configured throughput value may be a value slightly lower than the maximum message handling capacity and it may be configured based on a network behavior for the alerts that need to be created, for example, the configured throughput value may be set to 250 SMS/sec instead of 500 SMS/second.

At operation 1106, the alert messages are directed to the BTS 342a at the throughput value so as to provide the alert message to the user mobile devices associated with the BTS 342a.

At operation 1108, it is determined if more alert messages needs to be sent through the BTS 342a. For example, if the alert message needs to be sent to 1000 subscribers (or users), then it is determined if the alert message is sent to all of the 1000 subscribers. If it is determined that more alert messages need to be sent to the BTS 342a, the method 1100 again proceeds to 1106 to send the alert message to remaining user mobile devices associated with the BTS 342a in the alert area. At operation 1110, all operations are terminated or ended, if it is determined that the alert message has been sent to all of the 1000 subscribers.

In an example embodiment, the public alert system (200 or 322) can perform a static flow control for each individual BTS in the mobile network, or for a group of BTSs in the mobile network. For example, a set of BTSs with similar message handling capacity can be identified as a 'group of BTSs', and a message handling capacity defined for the group of BTSs is applicable for all BTSs in the group of BTSs. For example if BTSx, BTSy and BTSz are grouped as BTSGroup1 and the message handling capacity of BTSGroup1 capacity is configured as 300 SMS/Sec, the algorithm of the method 1100 considers each BTS in the group BTSGroup1 having a message handling capacity of 300 SMS/Sec. Accordingly, throughput of each of the BTS in the BTSGroup1 is initialized based on the maximum handling capacity at operation 1104.

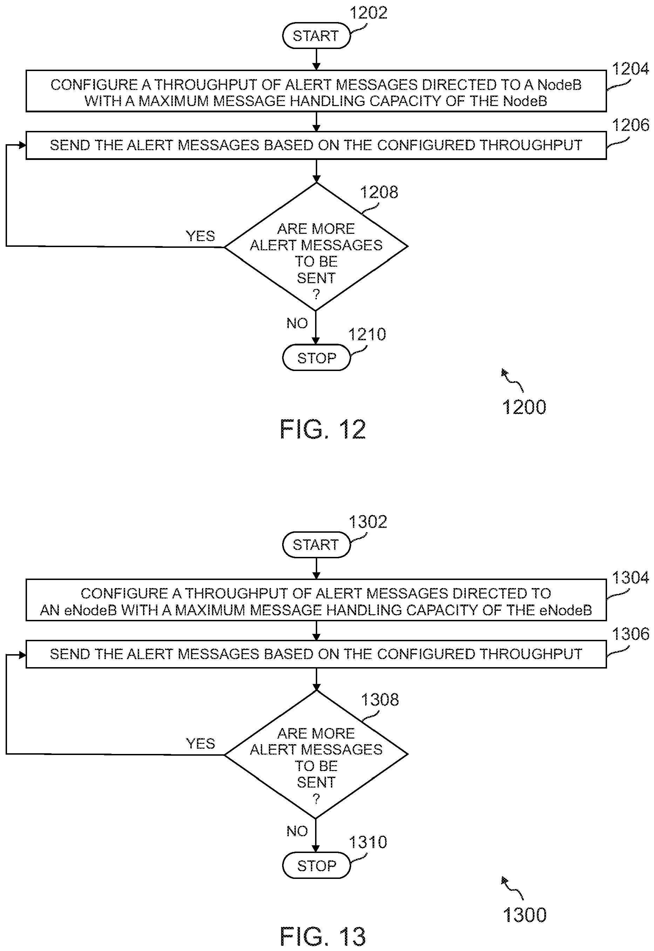

Another example flow diagram for static flow control of alert messages directed to the NodeB 344a or NodeB 344b is explained in FIG. 12.

FIG. 12 illustrates a flow diagram of an example method 1200 for static flow control of alert messages directed to the NodeB 344a in accordance with an example embodiment. The method 1200 starts at operation 1202.

At operation 1204, a throughput value (sending rate) of alert messages directed to the NodeB 344a is configured with a maximum message handling capacity of the NodeB 344a. For example, if the maximum message handling capacity of alert messages by the NodeB 344a is 300 SMS/second, the throughput value of alert messages directed to the NodeB 344a is configured at 300 SMS/second. It should be noted that in another example embodiment, the configured throughput value may be a value slightly lower than the maximum message handling capacity and it may be configured based on a network behavior for the alerts that need to be created. For example, the configured throughput value may be set to 250 SMS/sec instead of 500 SMS/second.

At operation 1206, the alert messages are directed to the NodeB 344a at the throughput value so as to provide the alert message to the user mobile devices associated with the NodeB 344a.

At operation 1208, it is determined if more alert messages needs to be sent through the NodeB 344a. For example, if the alert message needs to be sent to 1000 subscribers (or users), then it is determined if the alert message is sent to all of the 1000 subscribers. If it is determined that more alert messages need to be sent to the NodeB 344a, the method 1200 again proceeds to 1206 to send the alert message to remaining user mobile devices associated with the NodeB 344a in the alert area. At operation 1210, all operations are terminated or ended, if it is determined that the alert message has been sent to all of the 1000 subscribers.

In an example embodiment, the public alert system (200 or 322) can perform a static flow control for each individual NodeB in the mobile network, or for a group of NodeBs in the mobile network. For example, a set of NodeBs with similar message handling capacity can be identified as a 'group of NodeBs', and a message handling capacity defined for the group of NodeBs is applicable for all NodeBs in the group of NodeBs. For example if NodeBx, NodeBy and NodeBz are grouped as NodeBGroup1 and the message handling capacity of NodeBGroup1 capacity is configured as 300 SMS/Sec, the algorithm of the method 1200 considers each NodeB in the group NodeBGroup1 having a message handling capacity of 300 SMS/Sec. Accordingly, throughput of each of the NodeB in the NodeBGroup1 is initialized based on the maximum handling capacity at operation 1204.

Another example flow diagram for static flow control of alert messages directed to the eNodeB 346a or eNodeB 346b is explained in FIG. 13.

FIG. 13 illustrates a flow diagram of an example method 1300 for static flow control of alert messages directed to the eNodeB 346a in accordance with an example embodiment. The method 1300 starts at operation 1302.

At operation 1304, a throughput value (sending rate) of alert messages directed to the eNodeB 346a is configured with a maximum message handling capacity of the eNodeB 346a. For example, if the maximum message handling capacity of alert messages by the eNodeB 346a is 300 SMS/second, the throughput value of alert messages directed to the eNodeB 346a is configured at 300 SMS/second. It should be noted that in another example embodiment, the configured throughput value may be a value slightly lower than the maximum message handling capacity and it may be configured based on a network behavior for the alerts that need to be created. For example, the configured throughput value may be set to 250 SMS/sec instead of 300 SMS/second.

At operation 1306, the alert messages are directed to the eNodeB 346a at the throughput value so as to provide the alert message to the user mobile devices associated with the eNodeB 346a.

At operation 1308, it is determined if more alert messages needs to be sent through the eNodeB 346a. For example, if the alert message needs to be sent to 1000 subscribers (or users), then it is determined if the alert message is sent to all of the 1000 subscribers. If it is determined that more alert messages need to be sent to the eNodeB 346a, the method 1300 again proceeds to 1306 to send the alert message to remaining user mobile devices associated with the eNodeB 346a in the alert area. At operation 1310, all operations are terminated or ended, if it is determined that the alert message has been sent to all of the 1000 subscribers.

In an example embodiment, the public alert system (200 or 322) can perform a static flow control for each individual eNodeB in the mobile network, or for a group of eNodeBs in the mobile network. For example, a set of eNodeBs with similar message handling capacity can be identified as a 'group of eNodeBs', and a message handling capacity defined for the group of eNodeBs is applicable for all eNodeBs in the group of eNodeBs. For example, if eNodeBx, eNodeBy and eNodeBz are grouped as eNodeBGroupl and the message handling capacity of eNodeBGroupl capacity is configured as 300 SMS/Sec, the algorithm of the method 1300 considers each eNodeB in the group eNodeBGroupl having a message handling capacity of 300 SMS/Sec. Accordingly, throughput of each of the eNodeB in the eNodeBGroupl is initialized based on the maximum handling capacity at operation 1304.

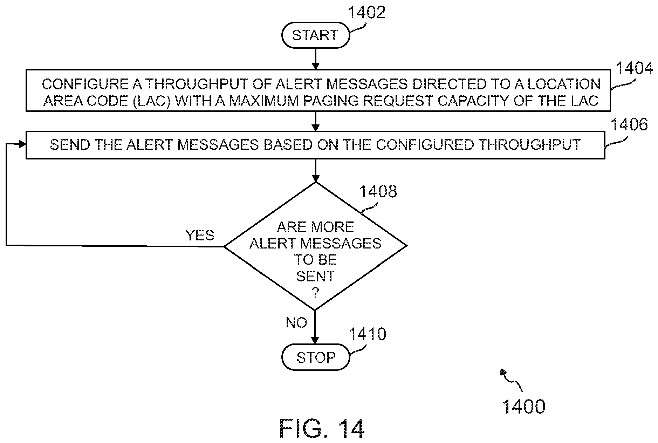

Another example flow diagram for static flow control of alert messages directed to the LAC is explained in FIG. 14.

FIG. 14 illustrates a flow diagram of an example method 1400 for static flow control of alert messages directed to the LAC in accordance with an example embodiment. The method 1400 starts at operation 1402.

At operation 1404, a throughput value (sending rate) of alert messages directed to the LAC is configured with a maximum paging request handling capacity of the LAC. For example, if the maximum paging request handling capacity of alert messages by the LAC is 500 pages/second, the throughput value of alert messages directed to the LAC is configured at 500 SMS/second. It should be noted that in another example embodiment, the configured throughput value may be a value slightly lower than the maximum paging request handling capacity, for example, the configured throughput value may be set to 450 SMS/sec. In an embodiment, the maximum paging request handling capacity is computed from the network resource capacity information of the mobile network 102 explained in FIG. 2.

At operation 1406, the alert messages are directed to the LAC at the throughput value so as to provide the alert message to the user mobile devices associated with the LAC.

At operation 1408, it is determined if more alert messages needs to be sent through the LAC. For example, if the alert message needs to be sent to 5000 subscribers (or users), then it is determined if the alert message is sent to all of the 5000 subscribers. If it is determined that more alert messages need to be sent to the LAC, the method 1400 again proceeds to 1406 to send the alert message to remaining user mobile devices associated with the LAC in the alert area. At operation 1410, all operations are terminated or ended, if it is determined that the alert message has been sent to all of the 5000 subscribers.

In an example embodiment, the public alert system (200 or 322) can perform a static flow control for each individual LAC in the mobile network, or for a group of LACs in the mobile network. For example, a set of LACs with similar message handling capacity can be identified as a 'group of LACs', and a message handling capacity defined for the group of LACs is applicable for all LACs in the group of LACs. For example if LACx, LACy and LACz are grouped as LACGroup1 and the message handling capacity of LACGroup1 capacity is configured as 500 SMS/Sec, the algorithm of the method 1400 considers each LAC in the group LACGroup1 having a message handling capacity of 500 SMS/Sec. Accordingly, throughput of each of the LAC in the LACGroup1 is initialized based on the maximum handling capacity at operation 1404.

Without in any way limiting the scope, interpretation, or application of the claims appearing below, a technical effect of one or more of the example embodiments disclosed herein is to provide techniques for sending alert messages during alert events to a large subscriber base in mobile networks. Various example embodiments provide mechanisms for controlling sending rate of the alert messages through individual or group of network elements based on their message handling capacities, for ensuring effective utilization of resources as well as precluding network congestion at the time of alert event. Since the alert messages are sent at the allocated message handling capacity (*e.g*., maximum message handling capacity), it avoids occurrences of network congestion in the mobile networks.

The present disclosure is described above with reference to block diagrams and flowchart illustrations of method and device embodying the present disclosure. It will be understood that various block of the block diagram and flowchart illustrations, and combinations of blocks in the block diagrams and flowchart illustrations, respectively, may be implemented by a set of computer program instructions. These set of instructions may be loaded onto a general purpose computer, special purpose computer, or other programmable data processing apparatus to cause a device, such that the set of instructions when executed on the computer or other programmable data processing apparatus create a means for implementing the functions specified in the flowchart block or blocks. Although other means for implementing the functions including various combinations of hardware, firmware and software as described herein may also be employed.

Various embodiments described above may be implemented in software, hardware, application logic or a combination of software, hardware and application logic. The software, application logic and/or hardware may reside on at least one memory, at least one processor, an apparatus or, a non-transitory computer program product. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a system described and depicted in FIGURES 2 and/or 3. A computer-readable medium may comprise a computer-readable storage medium that may be any media or means that can contain or store the instructions for use by or in connection with an instruction execution system, apparatus, or device, such as a computer.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated. It is understood that various omissions and substitutions of equivalents are contemplated as circumstance may suggest or render expedient, but such are intended to cover the application or implementation without departing from the scope of the claims of the present disclosure.

## Claims

1. A method for sending alert messages in a mobile network (102), the method comprising:
accessing location information (208) of a plurality of user mobile devices (110-124) in the mobile network (102) from a visitor location register, VLR database (202), the visitor location register, VLR database (202) configured by integrating with one or more location sources in the mobile network (102);
accessing a message handling capacity information of each of a plurality of network elements (104-108) in the mobile network (102); and
sending an alert message to the plurality of user mobile devices (110-124) through the plurality of network elements (104-108) based on the location information (208), wherein the alert message is sent through a network element of the plurality of network elements (104-108) at an allocated message sending rate based on a message handling capacity information of the network element (104-108), and wherein the allocated message sending rate is a maximum message sending rate.

2. The method of claim 1, further comprising:
accessing a network resource capacity information associated with the mobile network (102), wherein the sending rate of the alert message is further based on the network resource capacity information.

3. The method of claim 1, wherein accessing the location information (208) corresponding to a user mobile device of the plurality of user mobile devices (110-124) further comprises accessing information of network elements (104-108) that are currently servicing the user mobile device (110-124).

4. The method of claim 1, wherein sending the alert message through a group of network elements of the plurality of network elements (104-108) comprises sending the alert message at an allocated message sending rate through the group of network elements (104-108), the allocated message sending rate determined based on a message handling capacity information of the group of network elements (104-108).

5. The method of claim 1, wherein the plurality of network elements (104-108) comprises at least one of a mobile switching center (MSC) (324) and a serving GPRS support node (SGSN) (324).

6. The method of claim 1, wherein the plurality of network elements (104-108) comprises at least one of a base station controller (BSC) (342), a radio network controller (RNC) (344), a mobility management entity (MME) (346) and a femtocell gateway (348).

7. The method of claim 1, wherein the plurality of network elements (104-108) comprises at least one of a base transceiver station (BTS) (342a, 342b), a femtocell site, a NodeB (344a, 344b) and an eNodeB (346a, 346b).

8. The method of claim 2, wherein the network resource capacity information comprises at least one of an allowable number of paging requests of each location area code and a paging capacity information of each cell site.

9. The method of claim 1, further comprising identifying occurrence of an alert event in an alert area (126-130), wherein the alert message is associated with the alert event, and wherein the plurality of user mobile devices (110-124) are associated with a plurality of users in the alert area (126-130).

10. The method of claim 1, wherein integrating with the one or more location sources in the mobile network (102) comprises at least one of:
integrating with probes installed on one or more interfaces in the mobile network (102);
integrating with a mobile positioning system in the mobile network (102);
integrating with call data records associated with a mobile switching centre (MSC) (324) with location events; and
integrating with the visitor location register (VLR) database (202).

11. A public alert system (200, 322), comprising:
a visitor location register, VLR database (202) configured to store location information (208) of a plurality of user mobile devices (110-124) in a mobile network (102), the visitor location register, VLR database (202) configured by integrating with one or more location sources in the mobile network (102); and
a message handling system (204) communicably coupled with the visitor location register, VLR database (202) for accessing the location information (208), the message handling system (204) configured to:
access a message handling capacity information of each of a plurality of network elements (104-108) in the mobile network (102); and
send an alert message to the plurality of user mobile devices (110-124) through the plurality of network elements (104-108) based on the location information (208), wherein the alert message is sent through a network element of the plurality of network elements (104-108) at an allocated message sending rate based on a message handling capacity information of the network element (104-108), and wherein the allocated message sending rate is a maximum message sending rate.

12. The public alert system (200, 322) of claim 11, further configured to:
access a network resource capacity information associated with the mobile network (102), wherein the sending rate of the alert message is further based on the network resource capacity information.

13. The public alert system (200, 322) of claim 11, wherein accessing the location information (208) corresponding to a user mobile device of the plurality of user mobile devices (110-124) further comprises accessing information of network elements (104-108) that are currently servicing the user mobile device (110-124).

14. The public alert system (200, 322) of claim 11, wherein the message handling system (204) is configured to send the alert message through a group of network elements (104-108) at an allocated message sending rate, the allocated message sending rate determined based on a message handling capacity information of the group of network elements (104-108).

15. The public alert system (200, 322) of claim 11, wherein the plurality of network elements (104-108) comprises at least one of a mobile switching center (MSC) (324) and a serving GPRS support node (SGSN) (324).

## Patentansprüche

1. Ein Verfahren zum Senden von Alarmnachrichten in einem mobilen Netzwerk (102), wobei das Verfahren umfasst:
Zugreifen auf Ortsinformationen (208) über mehrere mobile Vorrichtungen (110-124) von Nutzern in dem mobilen Netzwerk (102) aus einer Besucherortsregister-, VLR-, Datenbank (202), die durch Integrieren mit einer oder mehreren Ortsquellen in dem mobilen Netzwerk (102) konfiguriert ist;
Zugreifen auf Nachrichtbehandlungskapazitätsinformationen über jedes von mehreren Netzwerkelementen (104-108) in dem mobilen Netzwerk (102); und
Senden einer Alarmnachricht an die mehreren mobilen Vorrichtungen (110-124) von Nutzern über die mehreren Netzwerkelemente (104-108) auf der Grundlage der Ortsinformationen (208), wobei die Alarmnachricht über ein Netzwerkelement der mehreren Netzwerkelemente (104-108) mit einer allozierten Nachrichtensenderate auf der Grundlage von Nachrichtbehandlungskapazitätsinformationen des Netzwerkelements (104-108) gesendet wird, und wobei die allozierte Nachrichtensenderate eine maximale Nachrichtensenderate ist.

2. Das Verfahren von Anspruch 1, das weiterhin umfasst:
Zugreifen auf Netzwerkressourcenkapazitätsinformationen, die mit dem mobilen Netzwerk (102) assoziiert sind, wobei die Senderate der Alarmnachricht weiterhin auf den Netzwerkressourcenkapazitätsinformationen basiert.

3. Das Verfahren von Anspruch 1, in dem das Zugreifen auf die Ortsinformationen (208) entsprechend einer mobilen Vorrichtung eines Nutzers von den mehreren mobilen Vorrichtungen (110-124) von Nutzern weiterhin das Zugreifen auf Informationen über Netzwerkelemente (104-108), die gegenwärtig der mobilen Vorrichtung (110-124) eines Nutzers Dienste bereitstellen, umfasst.

4. Das Verfahren von Anspruch 1, in dem das Senden der Alarmnachricht über eine Gruppe von Netzwerkelementen (104-108) das Senden der Alarmnachricht mit einer allozierten Nachrichtensenderate über die Gruppe von Netzwerkelementen (104-108) umfasst, wobei die allozierte Nachrichtensenderate auf der Grundlage von Nachrichtbehandlungskapazitätsinformationen über die Gruppe von Netzwerkelementen (104-108) bestimmt wird.

5. Das Verfahren von Anspruch 1, in dem die mehreren Netzwerkelemente (104-108) zumindest eines von einem mobilen Switching-Center (MSC) (324) und einem Dienste bereitstellenden GPRS-Support-Node (SGSN) (324) umfassen.

6. Das Verfahren von Anspruch 1, in dem die mehreren Netzwerkelemente (104-108) zumindest eines von einem Basisstationkontroller (BSC) (342), einem Funknetzwerkkontroller (RNC) (344), einer Mobility Management Entity (MME) (346) und einem Femtocell-Gateway (348) umfassen.

7. Das Verfahren von Anspruch 1, in dem die mehreren Netzwerkelemente (104-108) zumindest eines von einer Basistransceiverstation (BTS) (342a, 342b), einer Femtocell-Site, einem NodeB (344a, 344b) und einem eNodeB (346a, 346b) umfassen.

8. Das Verfahren von Anspruch 2, in dem die Netzwerkressourcenkapazitätsinformationen zumindest eines von einer erlaubten Anzahl an Paging-Anforderungen von jedem Ortsareacode und Pagingkapazitätsinformation über jede Cell-Site umfassen.

9. Das Verfahren von Anspruch 1, das weiterhin das Identifizieren des Auftretens eines Alarmereignisses in einem Alarmbereich (126-130) umfasst, wobei die Alarmnachricht mit dem Alarmereignis assoziiert ist, und wobei die mehreren mobilen Vorrichtungen (110-124) von Nutzern mit mehreren Nutzern in dem Alarmbereich (126-130) assoziiert sind.

10. Das Verfahren von Anspruch 1, in dem das Integrieren mit der einen oder den mehreren Ortsquellen in dem mobilen Netzwerk (102) zumindest eines von dem Folgenden umfasst:
Integrieren mit Probes, die auf einem oder mehreren Interfaces in dem mobilen Netzwerk (102) installiert sind;
Integrieren mit einem mobilen Lokalisierungssystem in dem mobilen Netzwerk (102);
Integrieren mit Anrufdaten-Records, die mit einem mobilen Switching-Center (MSC) (324) mit Ortsereignissen assoziiert sind; und
Integrieren mit der Besucherortsregister-, (VLR-), Datenbank (202).

11. Ein öffentliches Alarmsystem (200, 322), das umfasst:
eine Besucherortsregister-, VLR-, Datenbank (202), die dazu ausgebildet ist, Ortsinformationen über mehrere mobile Vorrichtungen (110-124) von Nutzern in einem mobilen Netzwerk (102) zu speichern, wobei die Besucherortsregister-, VLR-, Datenbank (202) durch Integrieren mit einer oder mehreren Ortsquellen in dem mobilen Netzwerk (102) konfiguriert ist; und
ein Nachrichtbehandlungssystem (204), das kommunikativ mit der Besucherortsregister-, VLR-, Datenbank (202) zum Zugreifen auf Ortsinformationen (208) verbunden ist, wobei das Nachrichtbehandlungssystem (204) dazu ausgebildet ist:
auf Nachrichtbehandlungskapazitätsinformationen über jedes von mehreren Netzwerkelementen (104-108) in dem mobilen Netzwerk (102) zuzugreifen; und
eine Alarmnachricht an die mehreren mobilen Vorrichtungen (110-124) von Nutzern über die mehreren Netzwerkelemente (104-108) auf der Grundlage der Ortsinformationen (208) zu senden, wobei die Alarmnachricht über ein Netzwerkelement der mehreren Netzwerkelemente (104-108) mit einer allozierten Nachrichtensenderate auf der Grundlage von Nachrichtbehandlungskapazitätsinformationen des Netzwerkelements (104-108) gesendet wird, und wobei die allozierte Nachrichtensenderate eine maximale Nachrichtensenderate ist.

12. Das öffentliche Alarmsystem (200, 322) von Anspruch 11, das weiterhin dazu ausgebildet ist:
auf Netzwerkressourcenkapazitätsinformationen, die mit dem mobilen Netzwerk (102) assoziiert sind, zuzugreifen, wobei die Senderate der Alarmnachricht weiterhin auf den Netzwerkressourcenkapazitätsinformationen basiert.

13. Das öffentliche Alarmsystem (200, 322) von Anspruch 11, in dem das Zugreifen auf die Ortsinformationen (208) entsprechend einer mobilen Vorrichtung eines Nutzers von den mehreren mobilen Vorrichtungen (110-124) von Nutzern weiterhin das Zugreifen auf Informationen über Netzwerkelemente (104-108), die gegenwärtig der mobilen Vorrichtung (110-124) eines Nutzers Dienste bereitstellen, umfasst.

14. Das öffentliche Alarmsystem (200, 322) von Anspruch 11, in dem das Nachrichtbehandlungssystem (204) dazu ausgebildet ist, die Alarmnachricht über eine Gruppe von Netzwerkelementen (104-108) mit einer allozierten Nachrichtensenderate zu senden, wobei die allozierte Nachrichtensenderate auf der Grundlage von Nachrichtbehandlungskapazitätsinformationen über die Gruppe von Netzwerkelementen (104-108) bestimmt wird.

15. Das öffentliche Alarmsystem (200, 322) von Anspruch 11, in dem die mehreren Netzwerkelemente (104-108) zumindest eines von einem mobilen Switching-Center (MSC) (324) und einem Dienste bereitstellenden GPRS-Support-Node (SGSN) (324) umfassen.

## Revendications

1. Procédé pour envoyer des messages d'alerte dans un réseau mobile (102), le procédé comportant les actions consistant à :
accéder à des informations de localisation (208) d'une pluralité de dispositifs mobiles d'utilisateurs (110-124) dans le réseau mobile (102), dans une base de données (202) de registre de localisation de visiteurs (VLR), la base de données (202) de registre de localisation de visiteurs (VLR) étant configurée en intégrant une ou plusieurs sources de localisation dans le réseau mobile (102) ;
accéder à des informations de capacité de traitement de messages de chacun d'une pluralité d'éléments réseau (104-108) dans le réseau mobile (102) ; et
envoyer un message d'alerte à la pluralité de dispositifs mobiles d'utilisateurs (110-124) via la pluralité d'éléments réseau (104-108) en se fondant sur les informations de localisation (208), où le message d'alerte est envoyé via un élément réseau de la pluralité d'éléments réseau (104-108) selon un taux d'envoi de messages alloué en se fondant sur une information de capacité de traitement de messages de l'élément réseau (104-108), et où le taux d'envoi de messages alloué est un taux d'envoi de messages maximal.

2. Procédé selon la revendication 1, comportant en outre les actions consistant à :
accéder à des informations de capacité de ressources réseau associées au réseau mobile (102), où le taux d'envoi du message d'alerte est en outre fondé sur l'information de capacité de ressources réseau.

3. Procédé selon la revendication 1, où l'accès aux informations de localisation (208) correspondant à un dispositif mobile d'utilisateur parmi la pluralité de dispositifs mobiles d'utilisateur (110-124) comporte en outre l'accès à des informations d'éléments réseau (104-108) qui desservent actuellement le dispositif mobile d'utilisateur (110-124).

4. Procédé selon la revendication 1, où l'envoi du message d'alerte via un groupe d'éléments réseau parmi la pluralité d'éléments réseau (104-108) comporte l'envoi du message d'alerte selon un taux d'envoi de messages alloué via le groupe d'éléments réseau (104-108), le taux d'envoi de messages alloué étant déterminé en se fondant sur des informations de capacité de traitement de messages du groupe d'éléments réseau (104-108).

5. Procédé selon la revendication 1, où la pluralité d'éléments réseau (104-108) comporte un centre de commutation de services mobiles (MSC) (324) et/ou un noeud de support du GPRS de desserte (SGSN) (324).

6. Procédé selon la revendication 1, où la pluralité d'éléments réseau (104-108) comporte un contrôleur de station de base (BSC) (342), et/ou un contrôleur de réseau radio (RNC) (344), et/ou une entité de gestion de la mobilité (MME) (346) et/ou une passerelle femtocell (348).

7. Procédé selon la revendication 1, où la pluralité d'éléments réseau (104-108) comporte une station émettrice-réceptrice de base (BTS) (342a, 342b) et/ou un site femtocell et/ou un NodeB (344a, 344b) et/ou un eNodeB (346a, 346b).

8. Procédé selon la revendication 2, où l'information de capacité de ressources réseau comporte un nombre admissible de demandes de radiomessagerie pour chaque indicatif régional de localisation et/ou une information de capacité de radiomessagerie de chaque site cellulaire.

9. Procédé selon la revendication 1, comportant en outre l'identification de la survenue d'un événement d'alerte dans une zone d'alerte (126-130), où le message d'alerte est associé à l'événement d'alerte, et où la pluralité de dispositifs mobiles d'utilisateurs (110-124) est associée à une pluralité d'utilisateurs dans la zone d'alerte (126-130).

10. Procédé selon la revendication 1, où l'intégration d'une ou plusieurs sources de localisation dans le réseau mobile (102) comporte :
l'intégration de sondes installées sur une ou plusieurs interfaces dans le réseau mobile (102) ; et/ou
l'intégration d'un système de localisation mobile dans le réseau mobile (102) ; et/ou
l'intégration d'enregistrements de données d'appel associées à un centre de commutation de services mobile (MSC) (324) avec des événements de localisation ; et/ou
l'intégration de la base de données (202) du registre de localisation de visiteurs (VLR).

11. Système d'alerte publique (200, 322) comportant :
une base de données (202) de registre de localisation de visiteurs (VLR) configurée pour stocker des informations de localisation (208) d'une pluralité de dispositifs mobiles d'utilisateurs (110-124) dans un réseau mobile (102), la base de données (202) de registre de localisation de visiteurs (VLR) étant configuré en intégrant une ou plusieurs sources de localisation dans le réseau mobile (102) ; et
un système de traitement de messages (204) couplé de manière communicative avec la base de données (202) de registre de localisation de visiteurs (VLR) pour accéder aux informations de localisation (208), le système de traitement de messages (204) étant configuré pour :
accéder à des informations de capacité de traitement de messages de chacun d'une pluralité d'éléments réseau (104-108) dans le réseau mobile (102) ; et
envoyer un message d'alerte à la pluralité de dispositifs mobiles d'utilisateur (110-124) via la pluralité d'éléments réseau (104-108) en se fondant sur les informations de localisation (208), où le message d'alerte est envoyé via un élément réseau de la pluralité d'éléments réseau (104-108) selon un taux d'envoi de messages alloué en se fondant sur une information de capacité de traitement de messages de l'élément réseau (104-108), et où le taux d'envoi de messages alloué est un taux d'envoi de messages maximal.

12. Système d'alerte publique (200, 322) selon la revendication 11, configuré en outre pour :
accéder à des informations de capacité de ressources réseau associées au réseau mobile (102), où le taux d'envoi du message d'alerte est en outre fondé sur l'information de capacité de ressources réseau.

13. Système d'alerte publique (200, 322) selon la revendication 11, où l'accès aux informations de localisation (208) correspondant à un dispositif mobile d'utilisateur parmi la pluralité de dispositifs mobiles d'utilisateurs (110-124) comporte en outre l'accès à des informations d'éléments réseau (104-108) qui desservent actuellement le dispositif mobile d'utilisateur (110-124).

14. Système d'alerte publique (200, 322) selon la revendication 11, où le système de traitement de messages (204) est configuré pour envoyer le message d'alerte via le groupe d'éléments réseau (104-108) selon un taux d'envoi de messages alloué, le taux d'envoi de messages alloué étant déterminé en se fondant sur des informations de capacité de traitement de messages du groupe d'éléments réseau (104-108).

15. Système d'alerte publique (200, 322) selon la revendication 11, où la pluralité d'éléments réseau (104-108) comporte un centre de commutation de services mobiles (MSC) (324) et/ou un noeud de support du GPRS de desserte (SGSN) (324).
